(19)

**Europäisches Patentamt**
**European Patent Office**
**Office européen des brevets**

(11) **EP 2 790 173 A1**

(12) **EUROPEAN PATENT APPLICATION**

(43) Date of publication:
**15.10.2014 Bulletin 2014/42**

(51) Int Cl.:
*G09G 3/34* (2006.01)     *G02F 1/1335* (2006.01)

(21) Application number: **14163978.1**

(22) Date of filing: **09.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.04.2013 JP 2013084123**

(71) Applicant: **Funai Electric Co., Ltd.**
**Daito city**
**Osaka 574-0013 (JP)**

(72) Inventors:
• **Yamashita, Hiroshi**
  **Osaka, Osaka 574-0013 (JP)**
• **Uchida, Masashi**
  **Osaka, Osaka 574-0013 (JP)**
• **Nameda, Makoto**
  **Osaka, Osaka 574-0013 (JP)**

(74) Representative: **Osha Liang SARL**
**32, avenue de l'Opéra**
**75002 Paris (FR)**

(54) **Display device**

(57)     A display device (1) comprises a display panel (2) and a direct-type first backlight (10A) and a direct-type second backlight (10B) that each intermittently irradiate light toward a back surface of the display panel (2) and is disposed adjacently in a sub-scanning direction of the display panel (2). A display area of the display panel (2) comprises a first area (16A) disposed in a position facing the direct-type first backlight (10A) and a second area (16B) disposed in a position facing the direct-type second backlight (10B), the direct-type first backlight (10A) is disposed in a position where the light emitted from the first backlight (10A) reaches the first area (16A) and the second area (16B), and the direct-type second backlight (10B) is disposed in a position where the light emitted from the direct-type second backlight (10B) reaches the first area (16A) and the second area (16B).

[FIG. 2]

**EP 2 790 173 A1**

## Description

[Technical Field]

The present invention relates to a display device, and particularly relates to a display device provided with a backlight that irradiates a light to a backplane of a display panel.

[Related Art]

Conventionally, a liquid crystal display device is known that intermittently lights a plurality of backlights while switching and while synchronizing to a writing of an image to a liquid crystal panel (see Patent Document 1).
Intermittently lighting a plurality of backlights in this manner prevents so-called motion image blurring, i.e., the image of the previous frame remaining as an after image.

[Documents of the Related Art]

[Patent Documents]

[Patent Document 1] Japanese Unexamined Patent Application No. 2002-231034
However, with this conventional liquid crystal display device, flicker stands out when intermittently lighting a plurality of backlights and controlling the illuminating light of each backlight with low frequency phasing, for example 60 Hz, according to the frame rate.

[Summary of the Invention]

One or more embodiments of the present invention provide a display device that can reduce flicker.
In one or more embodiments of the present invention, a display device may comprise: a display panel; a direct-type first backlight and a direct-type second backlight that each intermittently irradiate light toward a back surface of the display panel and is disposed adjacently in a sub-scanning direction of the display panel, wherein a display area of the display panel may comprise a first area provided in a position facing the direct-type first backlight and a second area provided in a position facing the direct-type second backlight, the direct-type first backlight may be disposed in a position where the light emitted from the direct-type first backlight reaches the first area and the second area, and the direct-type second backlight may be disposed in a position where the light emitted from the direct-type second backlight reaches the first area and the second area.
In one or more embodiments of this configuration, for example, the light emitted from the direct-type first backlight reaches not only the first area but also the second area. Furthermore, the light emitted from the direct-type second backlight may reach not only the second area but also the first area. Therefore, light having twice the frequency of the frequency of the intermittent operation of each backlight may reach each area. Therefore, flicker can be reduced.
In one or more embodiments of the present invention, the direct-type first backlight may be disposed in a position where a first peak light reaches the second area, the first peak light being a rectilinear light in a direction where light intensity of the light emitted from the direct-type first backlight is at a peak; and the direct-type second backlight may be disposed in a position where a second peak light reaches the first area, the second peak light being a rectilinear light in a direction where light intensity of the light emitted from the direct-type second backlight is at a peak.
In one or more embodiments of the present invention, each backlight may be designed so that the peak of the emitted light is emitted in an offset direction from the optical axis direction. Therefore, for example, disposing the direct-type first backlight in a position where the first peak light reaches the second area may allow the emitted light of the direct-type first backlight to be guided to the first area and the second area. Also disposing the direct-type second backlight in a similar manner may allow the emitted light of the direct-type second backlight to be guided to the first area and to the second area.
In one or more embodiments of the present invention, the direct-type first backlight may be disposed in a position where, within a range of emission directions of the first peak light, the first peak light reaches the second area by traveling straight in a first direction that is an emission direction nearest to an optical axis of the direct-type first backlight or traveling straight in a second direction that is an emission direction farthest from the optical axis of the direct-type first backlight; and the direct-type second backlight may be disposed in a position where, within a range of emission directions of the second peak light, the second peak light reaches the first area by traveling straight in a third direction that is an emission direction nearest to an optical axis of the direct-type second backlight or traveling straight in a fourth direction that is an emission direction farthest from the optical axis of the direct-type second backlight.
In one or more embodiments of the present invention, the emission direction of the peak light emitted from the backlight may have a constant width. Therefore, disposing the direct-type first backlight and the direct-type second backlight in the above position may allow each of the emitted lights of the direct-type first backlight and the direct-type second backlight to be guided to the first area and to the second area.

In one or more embodiments of the present invention, the direct-type first backlight may be disposed in a position between a position of the direct-type first backlight when the first peak light that travels straight in the first direction reaches an end portion of the second area farthest away from the first area and a position of the direct-type first backlight when the first peak light that travels straight in the second direction reaches a border between the first area and the second area.

In one or more embodiments of the present invention, disposing the direct-type first backlight in this type of position may allow the emitted light of the direct-type first backlight to be guided to the first area and to the second area.

Further, the direct-type second backlight may be disposed in a position between a position of the direct-type second backlight when the second peak light that travels straight in the third direction reaches an end portion of the first area farthest away from the second area and a position of the direct-type second backlight when the second peak light that travels straight in the fourth direction reaches a border between the first area and the second area.

In one or more embodiments of the present invention, disposing the direct-type second backlight in this type of position may allow the emitted light of the direct-type second backlight to be guided to the first area and to the second area.

Furthermore, the above display device may further comprise a driver that alternately lights the direct-type first backlight and the direct-type second backlight synchronously with a writing of an image on the display panel so that one of the direct-type first backlight or the direct-type second backlight is lit while the other is unlit.

Accordingly, in one or more embodiments of the present invention, synchronizing with writing of an image to the display panel may allow the direct-type first backlight and the direct-type second backlight to be intermittently lit.

Further, in one or more embodiments of the present invention, each of the direct-type first backlight and the direct-type second backlight may comprise a first LED group and a second LED group arrayed in the sub-scanning direction of the display panel, each of the first LED group and the second LED group may comprise an LED arrayed in a main scanning direction of the display panel, the direct-type first backlight may be disposed in a position where, in the sub-scanning direction of the display panel, light emitted from the first LED reaches the first area and the second area when the first LED is disposed in an intermediate position of the first LED group and the second LED group in the direct-type first backlight, and the direct-type second backlight may be disposed in a position where, in the sub-scanning direction of the display panel, light emitted from the second LED reaches the first area and the second area when the second LED is disposed in an intermediate position of the first LED group and the second LED group in the direct-type second backlight.

Accordingly, in one or more embodiments of the present invention, a disposed position for each backlight can be determined even if a position in the sub-scanning direction between LEDs is not aligned.

Further, the display device described above may further comprise a direct-type third backlight that intermittently emits light toward the back surface of the display panel, wherein the direct-type first backlight, direct-type second backlight, and third backlight may be disposed adjacently in the sub-scanning direction of the display panel in an order of the direct-type first backlight, the direct-type second backlight, and the third backlight, a display area of the display panel may further comprise a third area provided in a position facing the third backlight, the direct-type second backlight may be disposed in a position where the light emitted from the direct-type second backlight reaches the first area, the second area, and the third area, and the third backlight may be disposed in a position where the light emitted from the third backlight reaches the second area and the third area.

In one or more embodiments of this configuration, for example, the light emitted from the direct-type second backlight may reach not only the second area but also the first area, and the third area. Furthermore, the light emitted from the third backlight may reach not only the third area but also the second area. Light having three times the frequency of the frequency of the intermittent operation of each backlight may reach each area. Therefore, flicker can be reduced.

Further, the direct-type second backlight may be disposed in a position where the second peak light reaches the third area, and the third backlight may be disposed in a position where a third peak light reaches the second area, the third peak light being a rectilinear light in a direction where light intensity of the light emitted from the third backlight is at a peak.

In one or more embodiments of the present invention, each backlight may be designed so that the peak of the emitted light is emitted in an offset direction from the optical axis direction. Therefore, disposing the direct-type second backlight in a position where the second peak light reaches the third area may allow the emitted light of the direct-type second backlight to be guided to the second area and to the third area. Further, disposing the third backlight in a position where the third peak light reaches the second area may allow the emitted light of the third backlight to be guided to the second area and to the third area.

In one or more embodiments of the present invention, the direct-type second backlight may be disposed in a position where the second peak light reaches the third area by traveling straight in the third direction or traveling straight in the fourth direction, and the third backlight may be disposed in a position where, within a range of emission directions of the third peak light, the third peak light reaches the second area by traveling straight in a fifth direction that is an emission direction nearest to an optical axis of the third backlight or traveling straight in a sixth direction that is an emission direction farthest from the optical axis of the third backlight.

In one or more embodiments of the present invention, the emission direction of the peak light emitted from the backlight may have a constant width. Therefore, disposing the direct-type second backlight and the third backlight in the above position may allow each of the emitted lights of the direct-type second backlight and the third backlight to be guided to the second area and to the third area.

In one or more embodiments of the present invention, the direct-type second backlight may be disposed in a position between a position of the direct-type second backlight when the second peak light that travels straight in the third direction reaches an end portion of the third area farthest away from the second area and a position of the direct-type second backlight when the second peak light that travels straight in the fourth direction reaches a border between the second area and the third area.

In one or more embodiments of the present invention, disposing the direct-type second backlight in this type of position may allow the emitted light of the direct-type second backlight to be guided to the second area and to the third area.

In one or more embodiments of the present invention, the third backlight may be disposed in a position between a position of the third backlight when the third peak light that travels straight in the fifth direction reaches an end portion of the second area farthest away from the third area and a position of the third backlight when the third peak light that travels straight in the sixth direction reaches a border between the second area and the third area.

In one or more embodiments of the present invention, disposing the third backlight in this type of position may allow the emitted light of the third backlight to be guided to the second area and to the third area.

In one or more embodiments of the present invention, the display device described above may further comprise a driver that alternately lights the direct-type first backlight, the direct-type second backlight, and the third backlight synchronously with a writing of an image on the display panel so that while one of the direct-type first backlight, the direct-type second backlight, or the third backlight is lit, the other two are unlit.

Accordingly, in one or more embodiments of the present invention, synchronizing with writing of an image to the display panel allows the direct-type first backlight, the direct-type second backlight, and the third backlight to be intermittently lit.

One or more embodiments of the present invention can provide a display device that reduces flicker.

[Brief Description of Drawings]

FIG. 1 is a front view of a display device according to one or more embodiments of a first example of the present invention.

FIG. 2 is a diagram schematically illustrating a cross-section of a main part of the display device cutting across the line A-A in FIG. 1 according to one or more embodiments of the present invention.

FIG. 3 is a diagram to describe a position of a first backlight 10A that satisfies equation 7 according to one or more embodiments of the present invention.

FIG. 4 is a diagram to describe a method for determining a disposed position in the z direction of a direct-type second backlight 10B according to one or more embodiments of the present invention.

FIG. 5 is a diagram schematically illustrating a cross-section of a main part of the display device cutting across the line A-A in FIG. 1 according to one or more embodiments of the present invention.

FIG. 6 is a diagram to describe an advantageous effect of the display device according to one or more embodiments of a second example of the present invention.

FIG. 7 is a diagram illustrating a change in brightness of the light when a light emitted from each backlight does not reach an adjacent area according to one or more embodiments of the present invention.

FIG. 8 is a diagram illustrating an example of a display device where three backlights are disposed in a line at non-uniform spacing according to one or more embodiments of the present invention.

FIG. 9 is a diagram schematically illustrating an example of the disposed position in the z direction of each backlight according to one or more embodiments of the present invention.

FIG. 10 is a diagram to describe the disposed position of the LEDs comprised in a backlight according to one or more embodiments of a second modified example of the present invention.

[Detailed Description of Embodiments]

Embodiments of the present invention are described in detail below with reference to the drawings. The embodiments described below illustrate examples of the present invention. Numerical values, shapes, configuration elements, disposed positions, connection modes, and the like illustrated in the embodiments below are mere examples, and are not intended to limit the present invention. The present invention is specified by the scope of the claims.

(First Example)

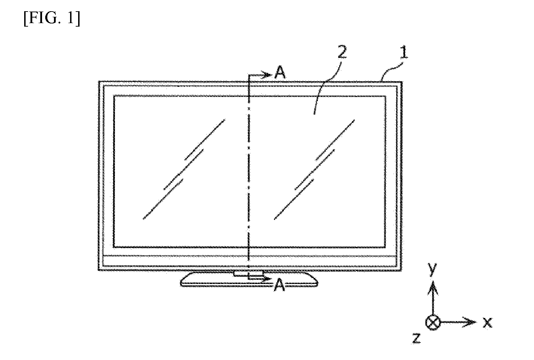

FIG. 1 is a front view of a display device according to one or more embodiments of a first example of the present invention. Display device 1 is provided with a liquid crystal panel 2 that is an example of the display panel at the front surface.

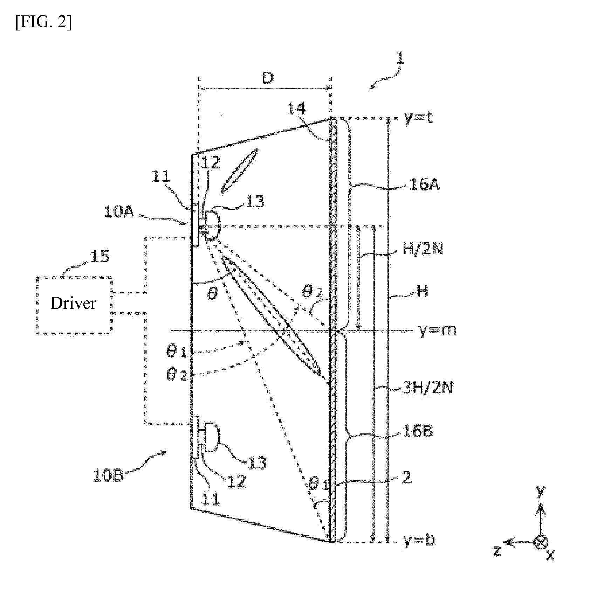

FIG. 2 is a diagram schematically illustrating a cross-section of a main part of the display device 1 cutting across the line A-A in FIG. 1.
On the backplane side of the inside of the display device 1, a first backlight 10A and a second backlight 10B, each a direct type, are disposed in a line in a sub-scanning direction (hereinafter, referred to as the y direction) of the liquid crystal panel 2. A direct type backlight is a backlight positioned behind the display panel, over the entire surface of the display panel. The first backlight 10A and the second backlight 10B are each provided with a substrate 11, a plurality of light emitting diodes (LED) 12, and a plurality of lenses 13 respectively. The plurality of LEDs 12 is disposed in a line in a main scanning direction (hereinafter, referred to as the x direction) of the liquid crystal panel 2 on the substrate 11. Each lens 13 corresponds to one of the plurality of LEDs 12 and is disposed on the corresponding LED 12.
A circuit for supplying a power to each LED 12 from a power source is wired on the substrate 11. Each LED 12 emits a light towards the back surface of the liquid crystal panel 2. Each substrate 11 is connected to a driver 15. The driver 15 alternately lights the first backlight 10A and the second backlight 10B synchronous to a writing of an image to the display panel 2 so that while one of the first backlight 10A or the second backlight 10B is lit, the other one is unlit.
The liquid crystal panel 2 may comprise a first area 16A provided in a position facing the first backlight 10A and a second area 16B provided in a position facing the second backlight 10B. The first area 16A and the second area 16B may not have an overlapping area. A coordinate in the y direction of the highest portion of the liquid crystal panel 2 is t, and a coordinate in the y direction of the lowest portion of the liquid crystal panel 2 is b. Further, a coordinate of the mid-point in the y direction between a position of the LED 12 of the first backlight 10A and a position of the LED 12 of the second backlight 10B is m. At that time, the first area 16A is an area on the liquid crystal panel 2 that satisfies $m \leq y \leq t$, and the second area 16B is an area on the liquid crystal panel 2 that satisfies $b \leq y < m$.
In one or more embodiments, the disposed position in a z direction of the first backlight 10A is determined so that a light emitted from the first backlight 10A reaches not only the first area 16A, but also reaches the second area 16B. Further, the disposed position in the z direction of the second backlight 10B is determined so that a light emitted from the second backlight 10B reaches not only the second area 16B, but also reaches the first area 16A.
A method for determining the disposed position in the z direction of each backlight is described below.
The determination method of the disposed position in the z direction of the first backlight 10A is described with reference to FIG. 2. First, a distance between a diffusion sheet 14 disposed on the back surface of the liquid crystal panel 2 and the z direction between each LED 12 is D. Further, a length in the y direction of the liquid crystal panel 2 is H. Furthermore, a number of backlights is N (in case of FIG. 2, N = 2). The LED 12 of the first backlight 10A is disposed in the position at $y = m + (H/2N)$.
The LED 12 and lens 13 are designed so that the peak intensity of the light emitted from the LED 12 does not come to the front, but comes in a direction inclined from the front (direction at angle $\theta$ in FIG. 2). Because a distance to the liquid crystal panel 2 from the LED 12 differs according to the position of the liquid crystal panel 2, the intensity of the light hitting the surface of the liquid crystal panel 2 is uniform as possible. The peak direction $\theta$ of the light intensity may have a constant width so as to satisfy the following equation 1.

$$\theta_1 \leq \theta \leq \theta_2 \ldots \text{(Equation 1)}$$

Here, $\theta_1$ and $\theta_2$ indicate the minimum angle and the maximum angle in the peak direction of the light intensity of LED 12.
Modifying equation 1 leads to equation 2.

$$\tan\theta_1 < \tan\theta < \tan\theta_2 \quad \ldots \text{(Equation 2)}$$

Here, $0 < \theta < \pi/2$.

Meanwhile, the following equations 3 and 4 are brought about by using a diagram.

$$\tan\theta_1 = D/(3H/2N) \quad \dots \text{(Equation 3)}$$

$$\tan\theta_2 = D/(H/2N) \quad \dots \text{(Equation 4)}$$

When equations 3 and 4 are substituted into the equation 2, the equation 5 is obtained.

$$D/(3H/2N) < \tan\theta < D/(H/2N) \quad \dots \text{(Equation 5)}$$

When equation 5 is modified, an equation 6 is obtained.

$$H\tan\theta/2N < D < 3H\tan\theta/2N \quad \dots \text{(Equation 6)}$$

Because the relationship of equation 2 applies, even when $\tan\theta$ of the extreme left side in equation 6 is substituted by $\tan\theta_1$, and $\tan\theta$ of the extreme right side in equation 6 is substituted by $\tan\theta_2$, the relationship of inequality is maintained. In other words, the flowing equation 7 is derived.

$$H\tan\theta_1/2N < D < 3H\tan\theta_2/2N \quad \dots \text{(Equation 7)}$$

By disposing the first backlight 10A at the position that satisfies equation 7, the light irradiated by the first backlight 10A reaches both the first area 16A and the second area 16B.

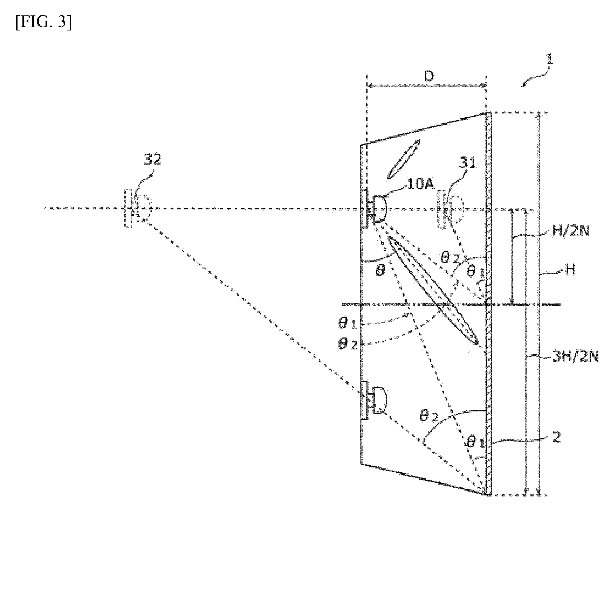

FIG. 3 is a diagram to describe a position of the first backlight 10A that satisfies the equation 7. That is, the position of the first backlight 10A that satisfies $D = H\tan\theta_1/2N$ is the position 31, and the position of the first backlight 10A that satisfies $D = 3H\tan\theta_2/2N$ is the position 32. In other words, the first backlight 10A may be disposed between position 31 and position 32.

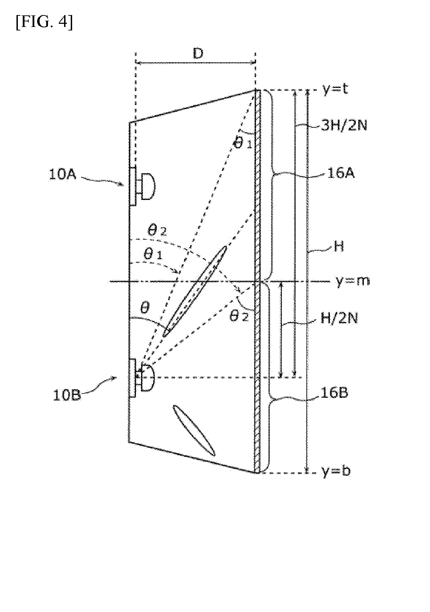

FIG. 4 is a diagram to describe a method for determining a disposed position in the z direction of the second backlight 10B. The LED 12 of the second backlight 10B is disposed in the position at $y = m - (H/2N)$. Other reference codes are the same as in FIG. 2.

The peak direction of light intensity of a light emitted from the LED 12 of the second backlight 10B also applies equation 2 in a similar manner to that of the first backlight 10A illustrated in FIG. 2. Further, the equations 3 and 4 are also applied by using a diagram. As a result, equation 7 can be derived from the equations 2 to 4.

That is, by disposing the second backlight 10B at the position that satisfies the equation 7, the light irradiated by the second backlight 10B reaches both the first area 16A and the second area 16B.

In summary, in one or more embodiments, the first backlight 10A is disposed in the position where a first peak light, a rectilinear light in a direction where a light intensity of the light emitted from the first backlight 10A is at its peak, reaches the second area 16B. That is, the first backlight 10A is disposed in a position where, within a range of emission directions that the first peak light can take, the first peak light that travels straight in a first direction (direction of the angle $\theta_2$) that is an emission direction nearest to an optical axis of the first backlight 10A, or the first peak light that travels straight in a second direction (direction of the angle $\theta_1$) that is an emission direction farthest from the optical axis of the first backlight 10A, reaches the second area 16B. Specifically, the first backlight 10A is disposed in a position between a disposed position of the first backlight 10A when the first peak light that travels straight in the first direction reaches an end portion (position at $y = b$) of the second area 16B farthest away from the first area 16A and a disposed position of the first backlight 10A when the first peak light that travels straight in the second direction reaches a border (position at $y = m$) between the first area 16A and the second area 16B.

Further, the second backlight 10B is disposed in a position where a second peak light, a rectilinear light in a direction where a light intensity of the light emitted from the second backlight 10B is at its peak, reaches the first area 16A. That is, the second backlight 10B is disposed in a position where, within a range of emission directions that the second peak light can take, the second peak light that travels straight in a third direction (direction of the angle $\theta_2$) that is an emission direction nearest to an optical axis of the second backlight 10B, or the second peak light that travels straight in a fourth direction (direction of the angle $\theta_1$) that is an emission direction farthest from the optical axis of the second backlight 10B, reaches the first area 16A. Specifically, the second backlight 10B is disposed in a position between a disposed position of the second backlight 10B when the second peak light that travels straight in the third direction reaches an end portion (position at y = t) of the first area 16A farthest away from the second area 16B and a disposed position of the second backlight 10B when the second peak light that travels straight in the fourth direction reaches a border (position at y = m) between the first area 16A and the second area 16B.

As described above, in the display device 1 according to one or more embodiments of the first example, a light where each backlight irradiates can reach the first area 16A and the second area 16B by disposing the first backlight 10A and the second backlight 10B in the position in the z direction that satisfies the equation 7. That is, the light emitted from the first backlight 10A reaches not only the first area 16A but also reaches the second area 16B. Further, the light emitted from the second backlight 10B reaches not only the second area 16B but also reaches the first area 16A. Accordingly, a light of a frequency of twice the frequency of the intermittent operation of each backlight reaches each area. Therefore, flicker can be reduced.

(Second Example)

Next, a display device according to one or more embodiments of a second example of the present invention is described. One or more embodiments of the display device according to the second example differ from one or more embodiments of the first example in that three backlights are provided.

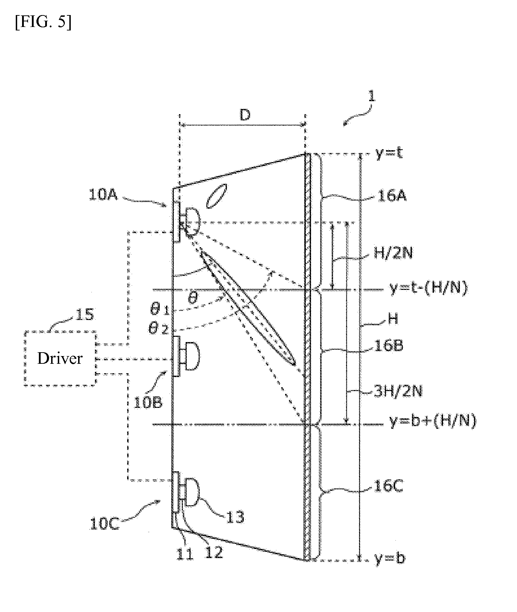

An outer appearance of the display device is as illustrated in FIG. 1. FIG. 5 is a diagram schematically illustrating a cross-section of a main part of the display device 1 cutting across the line A-A in FIG. 1.

The number of backlights is different from the display device 1 illustrated in FIG. 5.

On the backplane side of the inside of the display device 1, a first backlight 10A, a second backlight 10B, and a third backlight 10C are disposed in a line in a y direction. The first backlight 10A, the second backlight 10B, and a third backlight 10C are disposed in a line at equal intervals. A configuration of each backlight may be the same as in one or more embodiments of the first example. Therefore, detailed descriptions are not repeated here.

Each substrate 11 of each backlight is connected to a driver 15. The driver 15 alternately lights the first backlight 10A, the second backlight 10B, and the third backlight 10C synchronous to a writing of an image to the liquid crystal panel 2 so that while one of the first backlight 10A, the second backlight 10B, or the third backlight 10C is lit, other two are unlit.

The liquid crystal panel 2 may comprise a first area 16A provided in a position facing the first backlight 10A, a second area 16B provided in a position facing the second backlight 10B, and a third area 16C provided in a position facing the third backlight 10C. None of the areas overlap with an adjacent area. A width in the y direction of each area is H/N.

In one or more embodiments, the disposed position in the z direction of the first backlight 10A is determined so that a light emitted from the first backlight 10A reaches not only the first area 16A, but also reaches the second area 16B. Further, a disposed position in the z direction of the second backlight 10B is determined so that a light emitted from the second backlight 10B reaches not only the second area 16B, but also reaches the first area 16A and the third area 16C. Furthermore, the disposed position of the third backlight 10C is determined so that a light emitted from the third backlight 10C reaches not only the third area 16C, but also reaches the second area 16B.

A method for determining the disposed position in the z direction of each backlight is described below.

The method for determining the disposed position in the z direction of the first backlight 10A may be as described with respect to the first example, and the first backlight 10A is disposed at the position that satisfies the equation 7.

Further, the disposed position in the z direction of the second backlight 10B when a light emitted from the second backlight 10B reaches the first area 16A and second area 16B may be as described with respect to the first example. That is, the second backlight 10B is disposed at the position that satisfies the equation 7.

The disposed position in the z direction of the second backlight 10B when a light emitted from the second backlight 10B reaches the second area 16B and the third area 16C is calculated in the same manner as the disposed position in the z direction of the first backlight 10A. That is, the second backlight 10B is disposed at the position that satisfies the equation 7.

The disposed position in the z direction of the third backlight 10C when a light emitted from the third backlight 10C reaches the second area 16B and the third area 16C is calculated in the same manner as the disposed position in the z direction of the second backlight 10B when a light emitted from the second backlight 10B reaches the first area 16a and the second area 16B. That is, the third backlight 10C is disposed at the position that satisfies the equation 7.

In summary regarding how the disposed positions of the second backlight 10B and the third backlight 10C may differ from one or more embodiments of the first example, the second backlight 10B is further disposed in the position where the second peak light that travels straight in a third direction (direction of the angle $\theta_2$), or the second peak light that travels straight in a fourth direction (direction of the angle $\theta_1$), reaches the third area 16C. Specifically, the second backlight 10B is disposed in a position between a disposed position of the second backlight 10B when the second peak light that travels straight in the third direction reaches an end portion (position at y = b) of the third area 16C farthest away from the second area 16B and a disposed position of the second backlight 10B when the second peak light that travels straight in the fourth direction reaches a border (position at y = b + (H/N)) between the second area 16B and the third area 16C.

Further, the third backlight 10C is disposed in a position where a third peak light, a rectilinear light in a direction where a light intensity of the light emitted from the third backlight 10C is at its peak, reaches the second area 16B. That is, the third backlight 10C is disposed in a position where, within a range of emission directions that the third peak light can take, the third peak light that travels straight in a fifth direction (direction of the angle $\theta_2$) that is an emission direction nearest to an optical axis of the third backlight 10C, or the third peak light that travels straight in a sixth direction (direction of the angle $\theta_1$) that is an emission direction farthest from the optical axis of the third backlight 10C, reaches the second area 16B. Specifically, the third backlight 10C is disposed in a position between a disposed position of the third backlight 10C when the third peak light that travels straight in the fifth direction reaches an end portion (position at y = t - (H/N)) of the second area 16B farthest away from the third area 16C and a disposed position of the third backlight 10C when the third peak light that travels straight in the sixth direction reaches a border (position at y = b + (H/N)) between the second area 16B and the third area 16C.

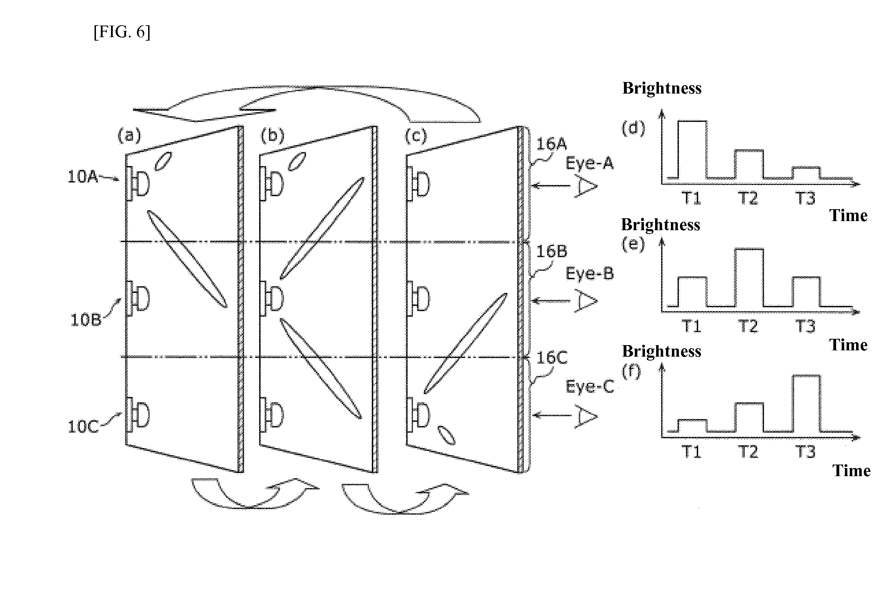

FIG. 6 illustrates a diagram to describe an advantageous effect of the display device 1 according to one or more embodiments of the second example. As illustrated in FIGS. 6(a), 6(b) and 6(c), the plurality of backlights are lit in order of the first backlight 10A, the second backlight 10B, and the third backlight 10C. For example, the backlight 10A, second backlight 10B and third backlight 10C are lit respectively at successive times T1, T2, and T3. FIG. 6(d) is a graph illustrating a brightness of the light reaching the first area 16A, and the horizontal axis indicates time and the vertical axis indicates the brightness of the light. FIG. 6(e) is a graph illustrating a brightness of the light reaching the second area 16B, and the horizontal axis indicates time and the vertical axis indicates the brightness of the light. FIG. 6(f) is a graph illustrating a brightness of the light reaching the third area 16C, and the horizontal axis indicates time and the vertical axis indicates the brightness of the light. A light from the first backlight 10A slightly reaches even the third area 16C. This is because the disposed position of the first backlight 10A is determined so that the peak light of the first backlight 10A reaches the border between the second area 16B and the third area 16C. For the same reason, a light from the third backlight 10C slightly reaches the first area 16A.

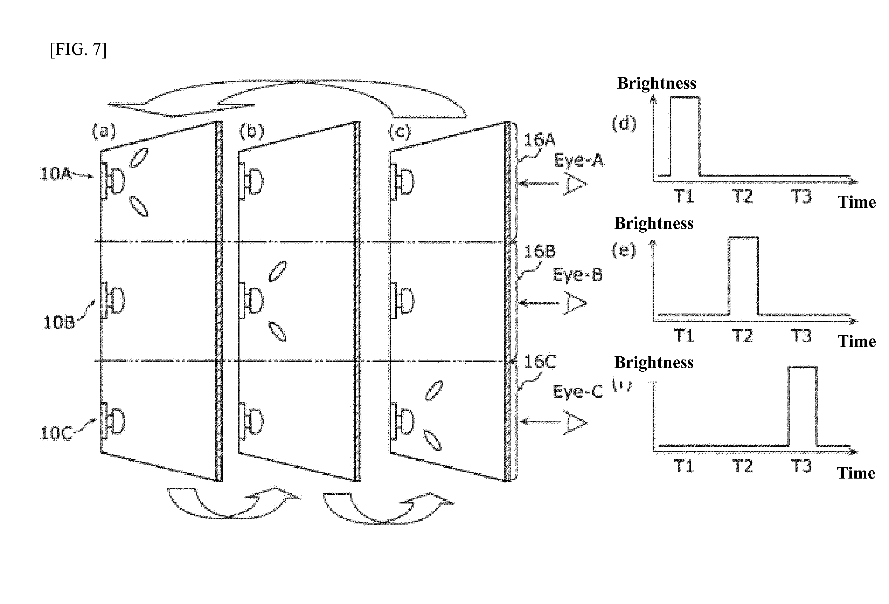

FIG. 7 is a diagram illustrating a change in brightness of the light when a light emitted from each backlight does not reach an adjacent area. As illustrated in FIGS. 7(a), 7(b) and 7(c), the plurality of backlights are lit in order of the first backlight 10A, the second backlight 10B and the third backlight 10C. For example, the backlight 10A, second backlight 10B, and third backlight 10C are lit respectively at successive times T1, T2, and T3. FIG. 7(d) is a graph illustrating a brightness of the light reaching the first area 16A, and the horizontal axis indicates time and the vertical axis indicates the brightness of the light. FIG. 7(e) is a graph illustrating a brightness of the light reaching the second area 16B, and the horizontal axis indicates time and the vertical axis indicates the brightness of the light. FIG. 7(f) is a graph illustrating a brightness of the light reaching the third area 16C, and the horizontal axis indicates time and the vertical axis indicates the brightness of the light. As can been seen from the graph in FIG. 7(d), a light reaches the first area 16A only at the time T1, and a light does not reach there other than at that time. As can been seen from graphs in FIGS. 7(e) and 7(f), this is also the same in the second area 16B and the third area 16C.

On the contrary, according to the display device 1 according to one or more embodiments of the second example, as can been seen from the graph in FIG. 6(d), a light reaches not only at time T1 when the first backlight 10 A is lit, but reaches at the times T2 and T3 also. As can been seen from graphs in FIGS. 6(e) and 6(f), this is also the same in the second area 16B and the third area 16C. Accordingly, if each backlight is operated intermittently at 60 Hz, a light of 180 Hz which is three times larger reaches each area. Further, a change in brightness with respect to the time change is also smooth.

(First Modified Example)

In one or more embodiments of the second example, a description is given of three backlights disposed in a line with equal spacing, but the spacing of the backlights may not have to be equal.

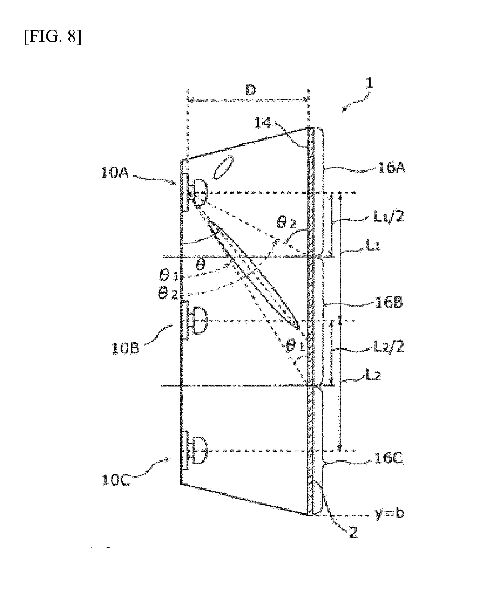

FIG. 8 is a diagram illustrating an example of a display device where three backlights are disposed in a line at non-uniform spacing. As illustrated in FIG. 8, a distance between the first backlight 10A and the second backlight 10B is L1, and a distance between the second backlight 10B and the third backlight 10C is L2. Such other conditions may be the same as in one or more embodiments of the second example.

The equations 8 and 9 are applied by using a diagram.

$$\tan\theta_1 = D/(L_1+L_2/2) \quad \ldots \text{(Equation 8)}$$

$$\tan\theta_2 = D/(L_1/2) \quad \dots \text{(Equation 9)}$$

When equations 8 and 9 are substituted into equation 2, the equation 10 is obtained.

$$D/( L_1+L_2/2) < \tan\theta < D/( L_1/2) \quad \dots \text{(Equation 10)}$$

When equation 10 is modified, an equation 11 is obtained.

$$(L_1/2) \tan\theta < D < (L_1+L_2/2) \tan\theta \quad \dots \text{(Equation 11)}$$

Because the relationship of equation 2 applies, even when $\tan\theta$ of the extreme left side in equation 11 is substituted by $\tan\theta_1$, and $\tan\theta$ of the extreme right side in equation 11 is substituted by $\tan\theta_2$, the relationship of inequality is maintained. In other words, the flowing equation 12 is derived.

$$(L_1/2) \tan\theta_1 < D < (L_1+L_2/2) \tan\theta_2 \quad \dots \text{(Equation 12)}$$

By disposing the first backlight 10A at the position that satisfies equation 12, the light irradiated by the first backlight 10A reaches both the first area 16A and the second area 16B.

The disposed position in the z direction of the second backlight 10B when a light irradiated from the second backlight 10B reaches both the first area 16A and the second area 16B can be calculated by the same calculation formula. Further, the disposed position in the z direction of the second backlight 10B when a light irradiated from the second backlight 10B reaches both the second area 16B and the third area 16C can be calculated by the same calculation formula. Furthermore, the disposed position in the z direction of the third backlight 10B when a light irradiated from the third backlight 10B reaches both the second area 16B and the third area 16C can be calculated by the same calculation formula.

For example, if a length H of the liquid crystal panel 2 is 485.65mm and a number of backlights N is 3, then $\theta_1$ may be set to 10° and $\theta_2$ may be set to 20° to satisfy the below table.

| H | 485.65mm | 572.82mm | 622.63mm |
|---|---|---|---|
| N | 3 | 3 | 3 |
| w | 161.88mm | 190.94mm | 207.54mm |
| $\theta_1$(min) | 10° | 10° | 10° |
| $\tan\theta_1$ | 0.17632698 | 0.17632698 | 0.17632698 |
| D (min) | 14.27mm | 16.83mm | 18.30mm |
| $\theta_2$ (max) | 20° | 20° | 20° |
| $\tan\theta_2$ | 0.36397023 | 0.36397023 | 0.36397023 |
| D (max) | 88.38mm | 104.24mm | 113.31mm |

As discussed above, a width W in the y direction of each area may be H/N, D (min) may be $H\tan\theta_1/2N$, and D (max) may be $3H\tan\theta_2/2N$.

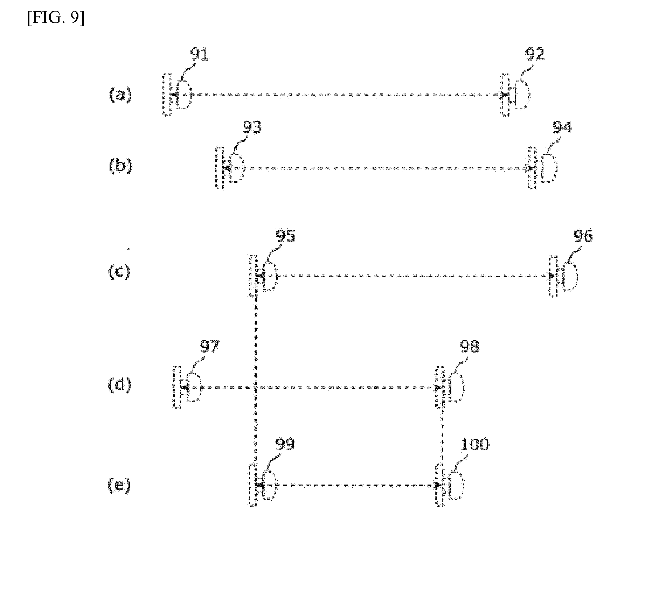

FIG. 9 is a diagram schematically illustrating an example of the calculated disposed position in the z direction of each backlight.

FIG. 9(a) is a diagram illustrating one example of a disposed position in the z direction of the first backlight 10A when a light irradiated from the first backlight 10A reaches both the first area 16A and the second area 16B. The first backlight 10A is disposed, for example, between position 91 and position 92.

FIG. 9(b) is a diagram illustrating one example of a disposed position in the z direction of the second backlight 10B when a light irradiated from the second backlight 10B reaches both the first area 16A and the second area 16B. The second backlight 10B is disposed, for example, between position 93 and position 94.

FIG. 9(c) is a diagram illustrating one example of a disposed position in the z direction of the second backlight 10B when a light irradiated from the second backlight 10B reaches both the second area 16B and the third area 16C. The second backlight 10B is disposed, for example, between position 95 and position 96.

FIG. 9(d) is a diagram illustrating one example of a disposed position in the z direction of the third backlight 10C when a light irradiated from the third backlight 10C reaches both the second area 16B and the third area 16C. The third backlight 10C is disposed, for example, between position 97 and position 98.

When the disposed positions of each backlight are different from each other, as illustrated in FIGS. 9(a) to 9(d), all the backlights are disposed in positions that satisfy all the conditions of FIGS. 9(a) to 9(d) as illustrated in FIG. 9(e). In other words, all the backlights of positions 91, 93, 95, and 97 on the side nearest to the liquid crystal panel 2, and those of positions 92, 94, 96, and 98 on the side farthest from the liquid crystal panel 2, may be positioned between positions 99 and 100. By this, all of the positions in the z direction of the backlights can be aligned.

(Second Modified Example)

In one or more embodiments of the first example, the plurality of LEDs 12 arrayed in each backlight is arrayed in a row in the x direction, but number of rows is not necessarily limited to one.

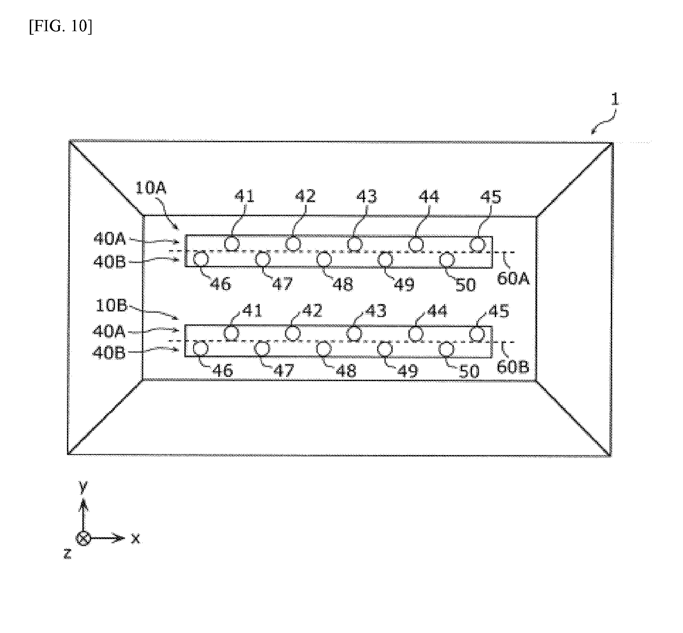

FIG. 10 is a diagram schematically illustrating the inside of the display device 1. The display device 1 may comprise the first backlight 10A and the second backlight 10B arrayed in the y direction.

The first backlight 10A may comprise a first LED group 40A and a second LED group 40B arrayed in the y direction.

Each of the first LED group 40A and the second LED group 40B may comprise at least one LED arrayed in the x direction. For example, the first LED group 40A may comprise LEDs 41 to 45 arrayed in the x direction, and the second LED group 40B may comprise LEDs 46 to 50 arrayed in the x direction.

The first backlight 10A is disposed in a position in the z direction where light emitted from the first LED reaches the first area 16A and the second area 16B when the first LED is assumed to be disposed in an intermediate position (position of a sub-line 60A) in the y direction of the first LED group 40A and the second LED group 40B included in the first backlight 10B. An intermediate position may be a position that is half the distance in the y direction between the first LED group 40A and the second LED group 40B, or it may be a position other than that.

The second backlight 10B is configured identically to the first backlight 10A. In other words, the second backlight 10B is disposed in a position in the z direction where light emitted from the second LED reaches the first area 16A and the second area 16B when the second LED is assumed to be disposed in an intermediate position (position of a sub-line 60B) in the y direction of the first LED group 40A and the second LED group 40B included in the second backlight 10B.

One or more embodiments of the modified example can also be applied to one or more embodiments of the second example. That is, the third backlight 10C may be configured identically to the first backlight 10A (or the second backlight 10B) illustrated in FIG. 10. In this case, a position in the z direction for the third backlight 10C can be calculated in the same manner as that for the first backlight 10A.

Although the disclosure has been described with respect to only a limited number of embodiments, those skilled in the art, having benefit of this disclosure, will appreciate that various other embodiments may be devised.

For example, the number of backlights may be four or more.

One or more embodiments of the present invention, as a display device, can apply to a liquid crystal display device and the like provided with a liquid crystal panel.

[Description of the Numerical References]

| | |
|---|---|
| 1 | Display device |
| 2 | Liquid crystal panel |
| 10A | First backlight |
| 10B | Second backlight |
| 10C | Third backlight |
| 11 | Substrate |
| 12 | LED |
| 13 | Lens |
| 14 | Diffusion sheet |
| 15 | Driver |
| 16A | First area |
| 16 B | Second area |
| 16 C | Third area |

31, 32, 91 to 100    Position

**Claims**

1. A display device (1), comprising:

   a display panel (2);
   a direct-type first backlight (10A) and a direct-type second backlight (10B) that each are configured to intermittently irradiate light toward a back surface of the display panel (2) and is disposed adjacently in a sub-scanning direction of the display panel (2), wherein
   a display area of the display panel (2) comprises a first area (16A) disposed in a position facing the direct-type first backlight (10A) and a second area (16B) disposed in a position facing the direct-type second backlight (10B),
   the direct-type first backlight (10A) is disposed in a position where the light emitted from the direct-type first backlight (10A) reaches the first area (16A) and the second area (16B), and
   the direct-type second backlight (10B) is disposed in a position where the light emitted from the direct-type second backlight (10B) reaches the first area (16A) and the second area (16B).

2. The display device (1) according to claim 1, wherein
   the direct-type first backlight (10A) is disposed in a position where a first peak light reaches the second area (16B), the first peak light being a rectilinear light in a direction where light intensity of the light emitted from the direct-type first backlight (10A) is at a peak; and
   the direct-type second backlight (10B) is disposed in a position where a second peak light reaches the first area, the second peak light being a rectilinear light in a direction where light intensity of the light emitted from the second backlight (10B) is at a peak.

3. The display device (1) according to claim 2, wherein
   the direct-type first backlight (10A) is disposed in a position where, within a range of emission directions of the first peak light, the first peak light reaches the second area (16B) by traveling straight in a first direction that is an emission direction nearest to an optical axis of the direct-type first backlight (10A) or traveling straight in a second direction that is an emission direction farthest from the optical axis of the direct-type first backlight (10A); and
   the direct-type second backlight (10B) is disposed in a position where, within a range of emission directions of the second peak light, the second peak light reaches the first area (16A) by traveling straight in a third direction that is an emission direction nearest to an optical axis of the direct-type second backlight (10B) or traveling straight in a fourth direction that is an emission direction farthest from the optical axis of the direct-type second backlight (10B).

4. The display device (1) according to claim 3, wherein
   the direct-type first backlight (10A) is disposed in a position between a position of the direct-type first backlight (10A) when the first peak light travelling straight in the first direction reaches an end portion of the second area (16B) farthest away from the first area (16A) and a position of the direct-type first backlight (10A) when the first peak light that travelling straight in the second direction reaches a border between the first area (16A) and the second area (16B).

5. The display device (1) according to claim 3 or 4, wherein
   the direct-type second backlight (10B) is disposed in a position between a position of the direct-type second backlight (10B) when the second peak light travelling straight in the third direction reaches an end portion of the first area (16A) farthest away from the second area (16B) and a position of the direct-type second backlight (10B) when the second peak light travelling straight in the fourth direction reaches a border between the first area (16A) and the second area (16B).

6. The display device (1) according to any of claims 1 to 5, further comprising a driver (15) configured to alternately light the direct-type first backlight (10A) and the direct-type second backlight (10B) synchronously with a writing of an image on the display panel (2) so that one of the direct-type first backlight (10A) or the direct-type second backlight (10B) is lit while the other is unlit.

7. The display device (1) according to any of claims 1 to 6, wherein
   each of the direct-type first backlight (10A) and the direct-type second backlight (10B) comprises a first LED group (40A) and a second LED group (40B) arrayed in the sub-scanning direction of the display panel (2),
   each of the first LED group (40A) and the second LED group (40B) comprises an LED (41, 42, 43, 44, 45, 46, 47, 48, 49, 50) arrayed in a main scanning direction of the display panel (2),

the direct-type first backlight (10A) is disposed in a position where, in the sub-scanning direction of the display panel (2), light emitted from the first LED (41, 42, 43, 44, 45) reaches the first area (16A) and the second area (16B) when the first LED (41, 42, 43, 44, 45) is disposed in an intermediate position (60A) of the first LED group (40A) and the second LED group (40B) in the direct-type first backlight (10A), and

the direct-type second backlight (10B) is disposed in a position where, in the sub-scanning direction of the display panel (2), light emitted from the second LED (46, 47, 48, 49, 50) reaches the first area (16A) and the second area (16B) when the second LED (46, 47, 48, 49, 50) is disposed in an intermediate position (60B) of the first LED group (40A) and the second LED group (40B) in the direct-type second backlight (10B).

8. The display device (1) according to any of claims 3 to 5, further comprising a third backlight (10C) configured to emit light intermittently toward the back surface of the display panel (2), wherein

the direct-type first backlight (10A), direct-type second backlight (10B), and third backlight (10C) are disposed adjacently in the sub-scanning direction of the display panel (2) in an order of the direct-type first backlight (10A), the direct-type second backlight (10B), and the third backlight (10C),

a display area of the display panel (2) further comprises a third area (16C) provided in a position facing the third backlight (10C),

the direct-type second backlight (10B) is disposed in a position where the light emitted from the direct-type second backlight (10B) reaches the first area, the second area (16B), and the third area (16C), and

the third backlight (10C) is disposed in a position where the light emitted from the third backlight (10C) reaches the second area (16B) and the third area (16C).

9. The display device (1) according to claim 8, wherein

the direct-type second backlight (10B) is disposed in a position where the second peak light reaches the third area (16C), and

the third backlight (10C) is disposed in a position where a third peak light reaches the second area (16B), the third peak light being a rectilinear light in a direction where light intensity of the light emitted from the third backlight (10C) is at a peak.

10. The display device (1) according to claim 9, wherein

the direct-type second backlight (10B) is disposed in a position where the second peak light reaches the third area (16C) by traveling straight in the third direction or traveling straight in the fourth direction, and

the third backlight (10C) is disposed in a position where, within a range of emission directions of the third peak light, the third peak light reaches the second area (16B) by traveling straight in a fifth direction that is an emission direction nearest to an optical axis of the third backlight (10C) or traveling straight in a sixth direction that is an emission direction farthest from the optical axis of the third backlight (10C).

11. The display device (1) according to claim 10, wherein

the direct-type second backlight (10B) is disposed in a position between a position of the direct-type second backlight (10B) when the second peak light travelling straight in the third direction reaches an end portion of the third area (16C) farthest away from the second area (16B) and a position of the direct-type second backlight (10B) when the second peak light travelling straight in the fourth direction reaches a border between the second area (16B) and the third area (16C).

12. The display device (1) according to claim 10 or 11, wherein

the third backlight (10C) is disposed in a position between a position of the third backlight (10C) when the third peak light travelling straight in the fifth direction reaches an end portion of the second area (16B) farthest away from the third area (16C) and a position of the third backlight (10C) when the third peak light travelling straight in the sixth direction reaches a border between the second area (16B) and the third area (16C).

13. The display device (1) according to any of claims 8 to 12, further comprising a driver (15) configured to alternately light the direct-type first backlight (10A), the direct-type second backlight (10B), and the third backlight (10C) synchronously with a writing of an image on the display panel (2) so that while one of the direct-type first backlight (10A), the direct-type second backlight (10B), or the third backlight (10C) is lit, the other two are unlit.

[FIG. 1]

[FIG. 2]

[FIG. 3]

[FIG. 4]

[FIG. 5]

[FIG. 6]

EP 2 790 173 A1

[FIG. 7]

EP 2 790 173 A1

[FIG. 8]

[FIG. 9]

[FIG. 10]

Europäisches
Patentamt

European
Patent Office

Office européen
des brevets

**EUROPEAN SEARCH REPORT**

Application Number

EP 14 16 3978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 518 714 A1 (SONY CORP [JP]) 31 October 2012 (2012-10-31) | 1 | INV. G09G3/34 G02F1/1335 |
| A | * paragraph [0029] - paragraph [0073]; figures 1-15 * ----- | 2-13 | |

TECHNICAL FIELDS
SEARCHED (IPC)

G09G
G02F

The present search report has been drawn up for all claims

| Place of search | Date of completion of the search | Examiner |
|---|---|---|
| Munich | 7 August 2014 | Harke, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 16 3978

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2014

| Patent document cited in search report | | Publication date | Patent family member(s) | | Publication date |
|---|---|---|---|---|---|
| EP 2518714 | A1 | 31-10-2012 | CN | 102760416 A | 31-10-2012 |
| | | | EP | 2518714 A1 | 31-10-2012 |
| | | | JP | 2012237982 A | 06-12-2012 |
| | | | TW | 201243810 A | 01-11-2012 |
| | | | US | 2012274667 A1 | 01-11-2012 |
| | | | US | 2013278490 A1 | 24-10-2013 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002231034 A